# EUROPEAN PATENT SPECIFICATION

(11) **EP 3 328 583 B1**
(45) Date of publication and mention of the grant of the patent: **22.12.2021**
(21) Application number: 16744504.8
(22) Date of filing: 25.07.2016
(51) Int. Cl.: B23Q 16/02, B24B 27/00, B24B 49/00, B23Q 16/10

(54) **TOOL SWIVEL ASSEMBLY**
WERKZEUGSCHWENKANORDNUNG
ENSEMBLE DE PIVOTEMENT D'OUTIL

(30) Priority: 27.07.2015 GB 201513186; 14.12.2015 GB 201521980
(43) Date of publication of application: 06.06.2018
(73) Proprietor: Fives Landis Limited, Keighley, Yorkshire BD20 7SD (GB)
(72) Inventor: BARTLETT, Christopher D, Keighley Yorkshire BD20 7SD (GB); BALDERSON, Christopher, Keighley Yorkshire BD20 7SD (GB)
(74) Representative: Sharrock, Daniel John
(86) International application number: PCT/GB2016/052275
(87) International publication number: WO 2017/017430

(56) References cited:
- EP-A1- 2 052 812
- EP-A2- 1 323 494
- WO-A1-2007/121907
- GB-A- 2 441 312

## Description

### Field of the invention

The present invention relates to a tool swivel assembly for a machine tool according to the preamble of claim 1 (see for example EP-2052812A1).

### Background to the invention

Tool swivel assemblies are used in machine tools to present a number of different tools to a workpiece. In abrasive machine processes, normally described as grinding, material is removed from the workpiece by a large number of cutting points held in a friable matrix in the form of a grinding wheel. The machine tool advances the grinding wheel into the workpiece to remove material until it reaches a position where the workpiece is at its final finished size. Such material removal processes are a complex combination of rough grinding and finish grinding.

During the rough grinding process, the majority of material is preferably removed using an aggressive, but wear resistant coarse grit grinding wheel or wheels. For example these wheels may consist of resilient CBN grit held in a strong vitrified bond matrix. The finish grinding process, which is a more delicate and precise operation, reduces the component accurately to its finished size, by using a grinding wheel which is also capable of imparting a desired finished surface integrity.

GB-A-2481632 describes a grinding wheel which is able to combine these two operations. However, some processes may require the use of multiple wheel profiles to remove material from sidewall features or journal features which are not easily achieved using a single wheel profile. Crankpin diameters of an automotive straight plunge ground crankshaft may need to be finished with a barrel shape. This is produced by a negative profile of the final working barrelled shape of the crankpin which is dressed into the face of the grinding wheel. The main bearing journal may have a different degree of curvature or even have no such shape requirement. Such machining operations demand the use of multiple wheels which could be mounted on separate grinding machines. The workpiece is then transferred from machine to machine. Alternatively, and more economically, processes that require multiple grinding wheels can be completed using machine designs that incorporate more than one wheelhead. Combinations of rough and finish grinding operations can be performed by a single machine if one or more of the wheelheads which carries wheel spindles is arranged to swivel to selectively present two, three or even four wheels each to the workpiece. This is achieved by rotation of an indexing wheelhead mechanism which supports multiple grinding spindles. A grinding machine with a wheelhead with direct drive rotation capability is disclosed in EP-A-1155780.

In some cases, it may be desirable to employ a gauging device in combination with a material removing tool, to monitor the progress of the material removal process. For example, mechanisms employed in the production of components using orbital grinding systems require the use of orbital gauging devices. Where a tool swivel assembly carries multiple material removal tools, the gauging device is either a static, worktable mounted device as described for example in US 4,637,144, or a dedicated gauging device may be provided in combination with each material removal tool.

### Summary of the invention

The present invention provides a tool swivel assembly for a machine tool as defined in claim 1.

In such a configuration, the position of a tool or gauge mounted on the fixed tool support does not change with any change in the rotational position of the rotatable tool support. Thus the tool or gauge on the fixed tool support can be used in combination with any of the material removal tools carried on the rotatable tool support. This avoids the need to provide a dedicated tool or gauge in association with each of the tools carried by the rotatable tool support. This may significantly reduce costs as precision tools and gauges may be expensive.

The assembly preferably includes a support structure which is fixed relative to the base, and defines a bearing support surface which extends circumferentially around the support shaft with respect to the longitudinal reference axis and is radially spaced from the support shaft; and
a bearing assembly, wherein the rotatable tool support is rotatably mounted on the bearing support surface via the bearing assembly.

This configuration may facilitate the use of a lighter rotatable tool support. This may improve the dynamic behaviour of the tool swivel assembly and may make it more responsive. Also, the construction of the tool swivel assembly may be simplified relative to prior configurations, providing economic and technical advantages.

The longitudinal reference axis of the support shaft may extend away from the base. More particularly, it may be perpendicular to a plane defined by an underside of the base which is for engagement with a machine tool.

The rotatable tool support may include a radially extending portion for carrying a tool at a distal end thereof. It may include an axially extending portion which extends axially away from the radially extending portion towards the base and extends circumferentially around the support shaft.

The radially extending portion may extend radially beyond the support structure for carrying one or more depending tools.

The support structure may be mounted on the base. The rotatable tool support may be carried by the support structure.

Embodiments of the tool swivel assembly may include a brake assembly for selectively fixing the rotational position of the rotatable tool support relative to the base.

The brake assembly may comprise a brake calliper carried by the support structure and a plate carried by the rotatable tool support, and the brake calliper is arranged to selectively clamp against the plate to hold the rotatable tool support in position relative to the support structure.

The plate may extend only partway around the longitudinal reference axis. A portion of the plate may be in the form of a segment of an annulus. The plate may be carried by the axially extending portion of the rotatable tool support. Preferably, in a plane which is perpendicular to the longitudinal reference axis and passes through the plate, the plate is located radially inwardly of the support structure.

In embodiments, the plate may be accessible and removable from the tool swivel assembly without requiring disassembly of the rotatable tool support from the tool swivel assembly.

In a further embodiment, the brake assembly comprises a plate carried by the tool support and a plate engaging assembly carried by the support structure for selectively engaging the plate. The plate may comprise an annular plate or plate portion. Preferably, in a plane which is perpendicular to the longitudinal reference axis and passes through the plate, the plate is located radially outwardly of the support structure.

The tool swivel assembly may include a drive arrangement for rotating the rotatable tool support relative to the support shaft, wherein the drive arrangement is an electric motor having a rotor carried by the rotatable tool support and a stator carried by the support structure. The rotor of the drive arrangement may be carried by the axially extending portion of the rotatable tool support. The rotor may be surrounded around its outer circumference by the stator.

The bearing assembly may comprise a journal bearing located between the support structure and the axially extending portion of the rotatable tool support (to support a radial load) and/or a thrust bearing located between the support structure and the radially extending portion of the rotatable tool support (to support an axial load). The bearing assembly may be a combined journal and thrust bearing assembly. The bearing pair may be in an "O" configuration.

The bearing assembly may be provided at a raised position, towards or at an upper end of the swivel assembly support structure. This facilitates the use of a rotatable tool support configuration in which the rotatable tool support extends radially outwardly over and beyond the upper end of the support structure for supporting a tool on the end beyond the support structure. Providing a bearing assembly carried by the support structure also enables provision of a rotatable tool support which extends axially along the support shaft towards the base, between the support structure and the support shaft. This allows the brake assembly and motor assemblies to be provided within the support structure, between the support structure and the axially extending portion of the rotatable tool support.

The tool swivel assembly may be in the form of a grinding wheelhead for supporting a grinding wheel spindle.

At least a part of the axially extending portion of the rotatable tool support may extend axially so as to be located between the support structure and the support shaft in the radial direction relative to the longitudinal reference axis.

### Brief description of the drawings

Embodiments of the invention will now be described by way of example and with reference to the accompanying schematic drawings wherein:
Figure 1 is a perspective view of a tool swivel assembly according an embodiment of the present invention;
Figures 2A and 2B are cross-sectional views of the assembly of Figure 1;
Figure 2C is a cross-sectional view of a bearing of the assembly of Figure 1;
Figures 3 and 4 are a perspective view and a side view, respectively, of the tool swivel assembly of Figure 1 in combination with a gauge assembly;
Figures 5 and 6 are cross-sectional perspective views of the tool swivel assembly of Figure 1, with the cross-sectional planes at different heights above the base of the assembly;
Figure 7 is a perspective view of a tool swivel assembly according to a further embodiment of the present invention;
Figure 8 is a perspective view of part of the assembly shown in Figure 7; and
Figure 9 is a cross-sectional view of the assembly of Figure 7.

### Detailed description

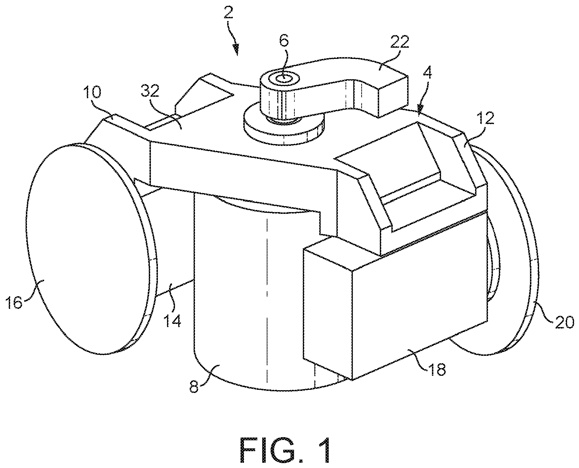

A tool swivel assembly 2 according to the present disclosure is shown in Figures 1 to 4. It includes a rotatable tool support 4 comprising a radially extending upper support plate 32 which is mounted for rotation about a fixed, non-rotating central support shaft in the form of a spigot 6 that is fixed with respect to a base 34

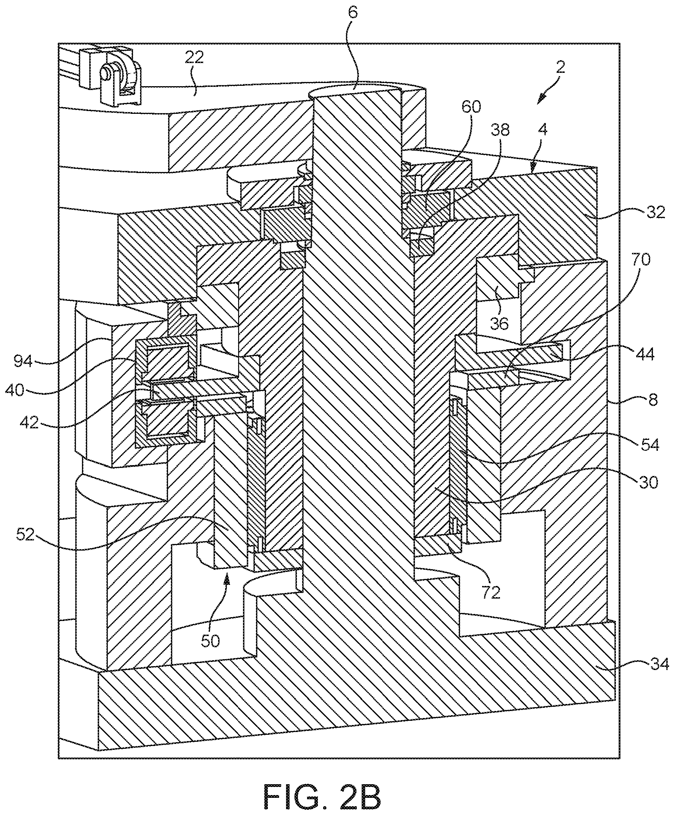

(Figure 2B). The upper support plate is carried by a fixed support structure in the form of a swivel assembly housing 8 that is also fixed with respect to base 34. The upper support plate extends radially beyond the housing 8 on opposite sides of the housing to form a pair of support arms 10 and 12. Arm 10 carries a grinding wheel spindle 14 which has a grinding wheel 16 mounted thereon, and similarly arm 12 carries a grinding wheel spindle 18 which has a grinding wheel 20 mounted thereon. A fixed tool support 22 is attached to the uppermost end of the spigot 6, above the upper support plate 32.

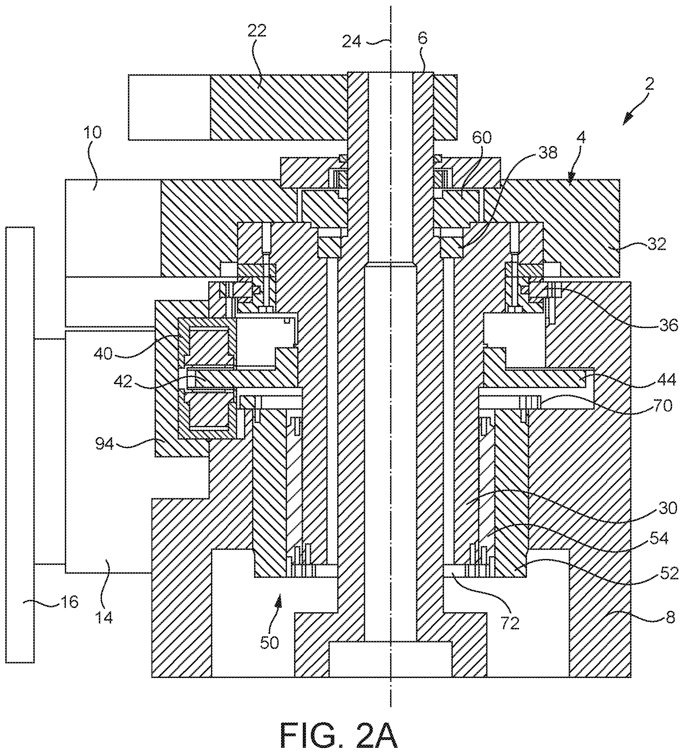

The spigot 6 has a longitudinal reference axis 24 as shown in Figure 2A. This axis is perpendicular to the plane of the base 34 of the tool swivel assembly. The base 34 is shown in Figure 2B, but omitted from the other Figures. It provides an interface between the tool swivel assembly and the associated machine tool. The base may be mounted on the feed axis casting of the machine tool for example.

The internal configuration of the tool swivel assembly of Figure 1 can be seen in the cross-sectional views of Figures 2A and 2B. The rotatable tool support 4 includes an axially extending portion (or spindle) 30. It extends downwardly from the upper support plate 32 of the rotatable tool support 4 towards the base 34 of the assembly, and extends circumferentially around the support shaft (spigot) 6.

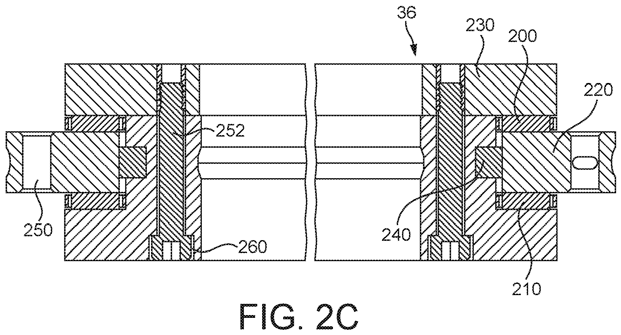

The rotatable tool support 4 is carried on and supported by the support structure 8 via a bearing assembly 36 (shown in more detail in Figure 2C) located between the support 4 and a bearing support surface of the support structure 8 which extends circumferentially around the support shaft 6 and the axially extending spindle 30 of the support 4, being radially spaced therefrom. In this embodiment, the bearing assembly 36 comprises a combined journal and thrust bearing in the form of a YRT395 bearing from Schaeffler, Germany (YRT395 is a model designation), which is a high precision bearing having both axial and radial components and which is designed to support radial loads, axial loads from both sides and tilting movements without clearance. The axial component comprises two axial needle and cage assemblies, with an upper row of rollers 200 and a lower row of rollers 210, an outer ring 220 and an inner ring 230. The radial component is a full complement preloaded cylindrical roller set 240. The outer ring 220 is secured with respect to the support structure 8 by retaining screws passing through fixing holes 250, and the inner ring is secured with respect to the rotatable tool support by retaining screws 252 passing through fixing holes 260. The bearing is radially and axially preloaded after fitting.

The rotatable tool support is given further support by a centrally located auxiliary bearing 38 between the spigot 6 and the rotatable tool support 4.

A brake calliper assembly is provided which consists of a calliper piston assembly 40 which is carried by the support structure 8. The piston assembly is arranged to receive and selectively clamp onto two planar disc segments 42 and 44. The disc segments are carried by the spindle 30 of the rotatable tool support 4.

The tool swivel assembly of Figures 2A and 2B also includes a motor assembly 50. This includes a stator 52 mounted on an inner circumferential surface of the fixed support structure 8 and a rotor 54 facing the stator and mounted on an outer circumferential surface of the spindle 30 of the rotatable tool support 4.

A position encoder 60 is mounted on the spindle 30 and is able to output a signal indicative of the position of the rotatable tool support 4 relative to the support shaft 6.

An upper seal 70 is provided to secure the motor stator 52 to the support structure 8 and its inner circumference engages the rotating spindle 30. A lower seal 72 retains the rotor 54 on the spindle 30 and its inner circumferential edge is in engagement with the outer circumference of the support shaft 6.

In a tool swivel assembly according to the present disclosure, a plurality of tools, such as grinding wheel spindles, may be supported by an upper structure (which extends radially away from axis 24 and may be generally planar) of a rotatable tool support so as to allow the presentation of a selected tool to a workpiece by the rotation of the rotatable tool support.

The rotatable tool support may extend radially over and beyond an upper portion of the support structure 8. The rotatable tool support may be configured to have one or more tools mounted onto an underside of (or suspended from) the tool support. One or more tools may be carried below the tool support. One or more tools may be carried by the tool support at a location (or locations) radially spaced from the support structure 8. In the embodiment of Figures 1 and 2, two tools in the form of grinding wheel spindles are attached to the rotatable tool support. It will be appreciated that three or more tools could be mounted on a suitable configured tool support. The tool support may extend downwardly only partway (if at all) over the outside of the support structure to allow access to the lower portion of the assembly which contains the drive assembly and brake calliper assembly.

In a tool swivel assembly of the present disclosure, the rotatable tool support may extend radially away from the support shaft and be arranged to carry a tool at a location towards its distal end. It may be arranged such that the tool is carried below the distal end. Ancillary components for use in combination with the tool which need to be fixed in position relative to the tool may conveniently be carried by the rotatable tool support.

The provision of a fixed tool support 22 allows a tool to be provided for use in combination with any one of, some or all of the tools mounted on the rotatable tool support. This avoids the need to provide a dedicated tool or gauge in association with each of the tools carried by the rotatable tool support. This may significantly reduce costs as precision tools and gauges may be expensive. For example, an orbital gauging system may be mounted on the fixed tool support 22 to monitor the size of the workpiece during grinding by any one of a multiplicity of grinding wheels carried by wheel spindles mounted on the rotatable tool support. The rotational position about axis 24 of a tool or gauge mounted on the fixed tool support is independent of the rotational angle of the rotatable tool support relative to axis 24 and is constant in relation to the workpiece. One or more tools may be mounted on the fixed tool support, such as a number of different gauges for monitoring the progress of a material removal process.

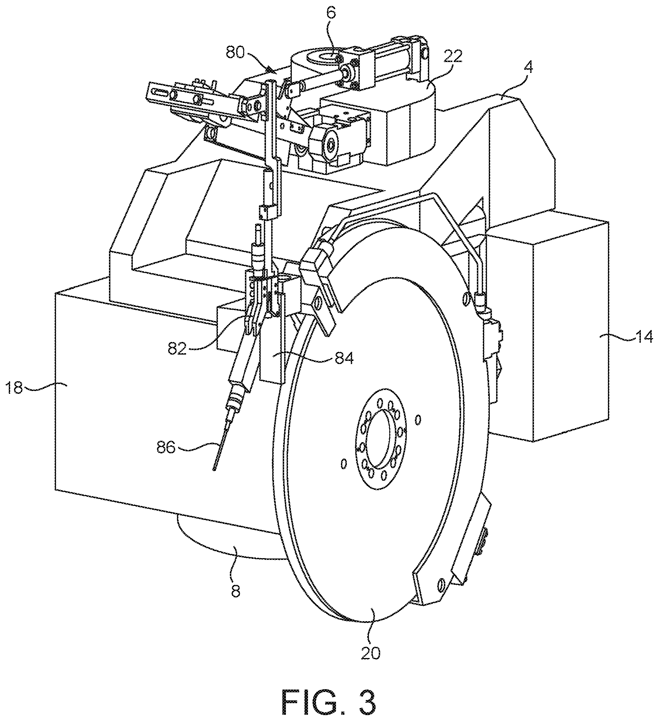

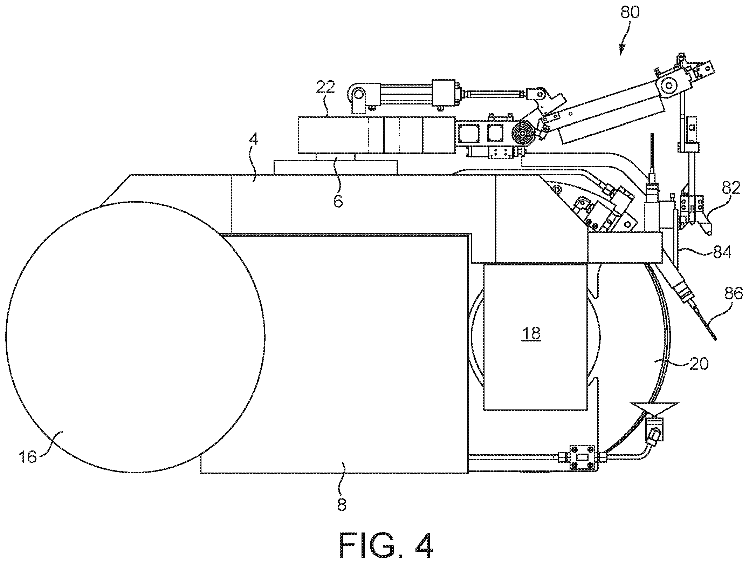

By way of example, Figures 3 and 4 show a gauge arm mechanism in combination with a tool swivel assembly according to the present disclosure. The gauge arm mechanism 80 is mounted on the fixed tool support 22. The gauge arm mechanism includes a gauge head 82 for engagement with the workpiece. The rotatable support tool 4 carries the grinding wheel spindles 14 and 18. It also carries a coolant nozzle 84 and a workpiece lateral locator 86.

In use of the tool swivel assembly, the base of the gauge arm assembly stays fixed in space relative to the workpiece when the rotatable tool support and the components carried by it, including the grinding wheels, coolant nozzle and workpiece lateral locator, index to present the associated grinding wheel to the workpiece.

The upper end of the support shaft 6, above the upper support plate 32 of the rotatable tool support 4, provides an easily accessible location point which is in permanent linear alignment with other features fixed in position relative to the machine tool on which the tool swivel assembly is mounted. For example, it will be fixed in position relative to a workpiece mounted on supports which are fixed to the machine tool.

The bearing assembly 36 is provided at a raised position, towards or at an upper end of the swivel assembly support structure. This facilitates the use of a rotatable tool support configuration in which the rotatable tool support extends radially outwardly over and beyond the upper end of the support structure for supporting a tool on the end beyond the support structure. Providing a bearing assembly carried by the support structure also enables provision of a rotatable tool support which extends axially along the support shaft towards the base, between the support structure and the support shaft. This allows the brake assembly and motor assemblies to be provided within the support structure, between the support structure and the axially extending portion of the rotatable tool support.

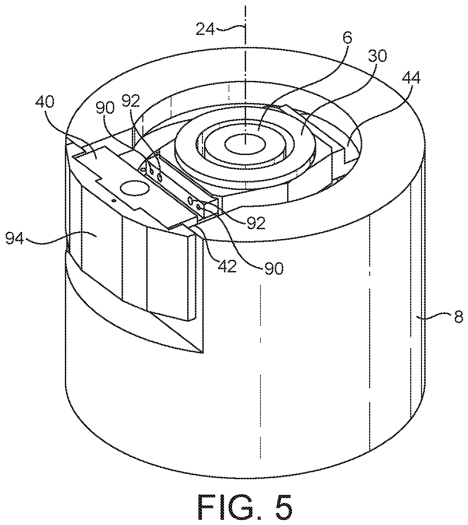

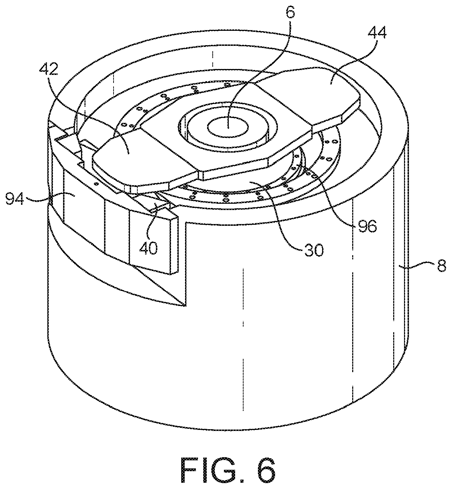

Figures 5 and 6 show cross-sectional views of the brake calliper assembly. Each cross-section is along a plane perpendicular to the longitudinal reference axis 24, with the plane of the cross-section of Figure 5 being slightly higher than that of Figure 6.

The calliper brake assembly comprises a brake calliper piston assembly 40 carried by the support structure 8 and two removable disc segments 42 and 44. The disc segments are attached to the rotatable tool spindle 30. The disc segments are attached to location surfaces which are machined onto the spindle 30. The segments are secured by bolts 90 and registered in position by location dowels 92. The dowels also minimise any risk of hysteresis (or lost motion) in the brake assembly when the brake is applied.

The disc segments are accessible via a removable access panel 94. This allows the brake piston assembly to be removed exposing an adjacent disc segment. This allows each segment to be detached from the spindle 30 for repair or renewal. The top end cap 96 of the motor rotor is visible in Figure 6.

The piston brake assembly is arranged to selectively clamp the disc segments. The segments are made to be sufficiently small segments of a full circle such that the clamp action is able to operate when a tool is located in a workpiece engaging position whilst allowing the disc segment to be removable via the access panel 94. The discs may be configured to allow the rotatable tool support to be clamped in position over the limited articulation angle needed during crankshaft grinding, for example.

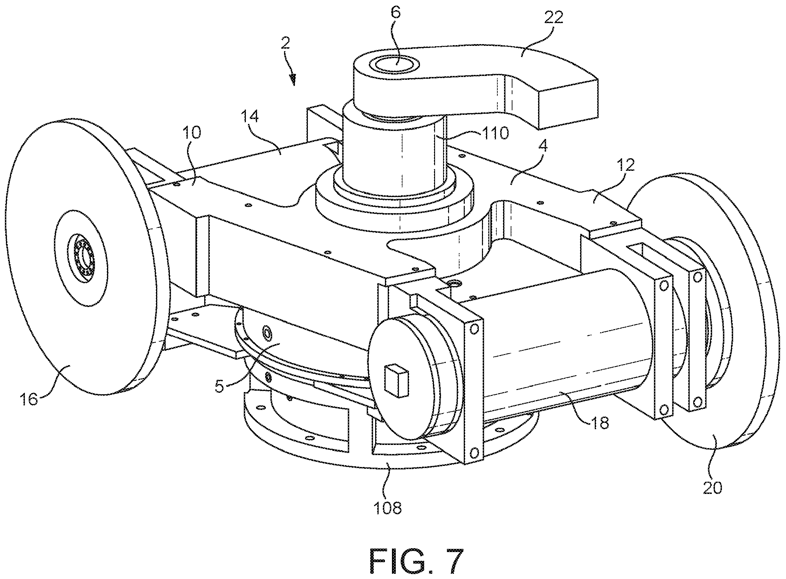

In a further embodiment depicted in Figures 7 to 9, the tool swivel assembly incorporates an alternative brake assembly to that of the tool swivel assembly of Figures 1 to 6. The reference numerals employed in describing the embodiments above are generally used to refer to corresponding or similar features in the further embodiment where appropriate.

In the embodiment of Figures 7 to 9, a cylindrical structure 5 is attached to the underside of the upper support plate 32 of the rotatable tool support 4. A brake annulus in the form of an annular plate 7 is mounted on the cylindrical structure 5 and extends radially inwardly therefrom. The annular plate 7 acts as a brake disc for the brake assembly. A plate engaging assembly 40, 41 is carried by a support structure 108.

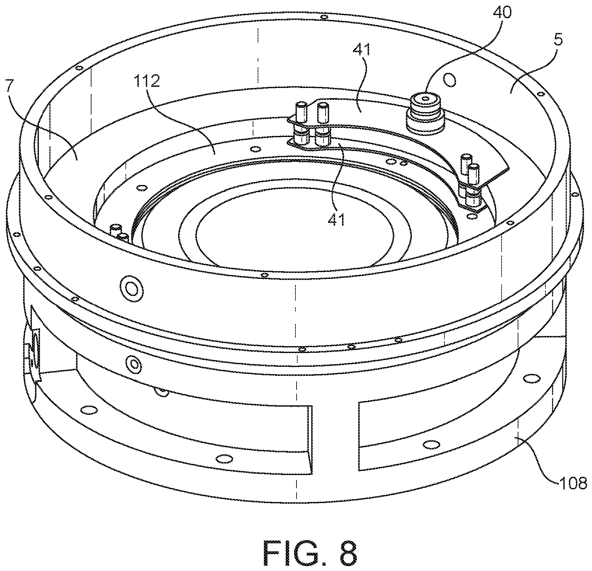

The plate engaging assembly comprises a pair of brake pistons 40, the uppermost of which is visible in Figure 8. They are mounted on an internal extension 112 of the support structure 108. The pistons act on respective brake pads 41 visible in Figure 8.

Preferably, a second set of brake pistons and brake pads as visible in Figure 8 is also provided on the opposite side of the support structure 108 with respect to the central longitudinal reference axis for selectively engaging the annular plate 7.

The brake assembly allows the position of the rotatable tool support to be selectively fixed at any swivel angle relative to the base of the tool swivel assembly.

A cylindrical spacer element 110 is carried by the rotatable support between the rotatable tool support 4 and the fixed tool support 22.

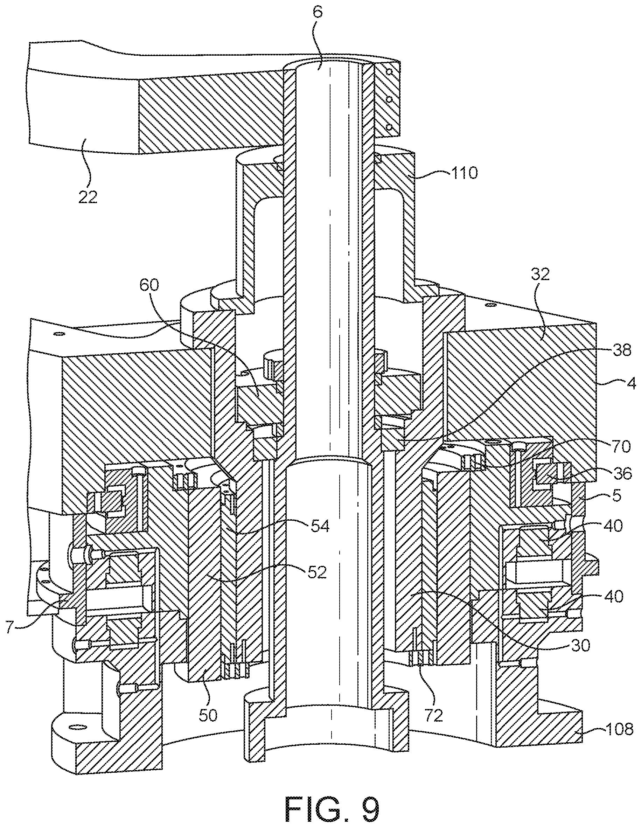

As can be seen in Figure 9, the annular plate 7 is carried by the upper support plate 32 of tool support 4 and cylindrical structure 5 at a location radially outwardly from a portion of the support structure 108 that it surrounds. This is in contrast to the embodiment of Figures 1 to 6 in which the brake plate is located radially inwardly from the adjacent portion of the support structure 8. In the embodiment of Figures 7 to 9, the cylindrical part 5 serves to cover over or encase mechanical component parts of the swivel assembly.

## Claims

1. A tool swivel assembly for a machine tool, the assembly comprising:
a base (34) for mounting on a machine tool;
a support shaft (6) in a fixed position and orientation relative to the base, the support shaft having a longitudinal reference axis;
a rotatable tool support (4) which is rotatable relative to the support shaft about the longitudinal reference axis; and **characterised by** a fixed tool support (22) which is fixed relative to and carried by the support shaft, and has a tool or a gauge mounted thereon.

2. An assembly of claim 1 including a support structure (8) which is fixed relative to the base, and defines a bearing support surface which extends circumferentially around the support shaft with respect to the longitudinal reference axis and is radially spaced from the support shaft; and
a bearing assembly (36),
wherein the rotatable tool support is rotatably mounted on the bearing support surface via the bearing assembly, and preferably the bearing assembly is a combined journal and thrust bearing assembly.

3. An assembly of claim 1 or 2, wherein the rotatable tool support includes a radially extending portion for carrying a tool at a distal end thereof, and an axially extending portion which extends axially away from the radially extending portion towards the base and extends circumferentially around the support shaft.

4. An assembly of any preceding claim, including a brake assembly for selectively fixing the rotational position of the rotatable tool support relative to the base.

5. An assembly of claim 4 when dependent directly or indirectly on claim 2, wherein the brake assembly comprises a brake calliper carried by the support structure and a plate carried by the rotatable tool support, and the brake calliper is arranged to selectively clamp against the plate to hold the rotatable tool support in position relative to the support structure.

6. An assembly of claim 5, wherein the plate extends only partway around the longitudinal reference axis.

7. An assembly of claim 5 or claim 6 when dependent on claim 3, wherein the plate is carried by the axially extending portion of the rotatable tool support.

8. An assembly of any of claims 5 to 7 when dependent directly or indirectly on claim 2, wherein, in a plane which is perpendicular to the longitudinal reference axis and passes through the plate, the plate is located radially inwardly of the support structure.

9. An assembly of any of claims 5 to 8, wherein the plate comprises two disc segments (42, 44) which are accessible and removable from the tool swivel assembly via a removable access panel (94) of the support structure, without requiring disassembly of the rotatable tool support from the tool swivel assembly.

10. An assembly of claim 4 when dependent directly or indirectly on claim 2, wherein the brake assembly comprises a plate carried by the tool support and a plate engaging assembly carried by the support structure for selectively engaging the plate, preferably the plate comprises an annular plate, and preferably in a plane which is perpendicular to the longitudinal reference axis and passes through the plate, the plate is located radially outwardly of the support structure.

11. An assembly of claim 2 or any claim dependent thereon including a drive arrangement for rotating the rotatable tool support relative to the support shaft, wherein the drive arrangement is an electric motor having a rotor carried by the rotatable tool support and a stator carried by the support structure.

12. An assembly of claim 11 when dependent directly or indirectly on claim 3, wherein the rotor is carried by the axially extending portion of the rotatable tool support.

13. An assembly of any preceding claim when dependent directly or indirectly on claim 2 and claim 3, wherein the bearing assembly comprises a journal bearing located between the support structure and the axially extending portion of the rotatable tool support and a thrust bearing located between the support structure and the radially extending portion of the rotatable tool support.

14. An assembly of any preceding claim, wherein the assembly is a grinding wheelhead for supporting a grinding wheel spindle.

15. A machine tool including an assembly of any preceding claim.

## Patentansprüche

1. Werkzeugschwenkanordnung für eine Werkzeugmaschine, wobei die Anordnung Folgendes umfasst:
eine Basis (34) zur Montage auf einer Werkzeugmaschine;
eine Trägerwelle (6) in einer festen Position und Ausrichtung in Bezug zur Basis, wobei die Stützwelle eine in Längsrichtung verlaufende Bezugsachse aufweist;
einen drehbaren Werkzeugträger (4), der in Bezug zur Trägerwelle um die in Längsrichtung verlaufende Bezugsachse drehbar ist; und **gekennzeichnet durch** einen festen Werkzeugträger (22), der in Bezug zur Trägerwelle fest ist und davon getragen wird, und auf dem ein Werkzeug oder Messerinstrument montiert ist.

2. Anordnung nach Anspruch 1, eine Trägerstruktur (8) umfassend, die in Bezug zur Basis fest ist und eine Lagerträgerfläche definiert, die sich in Bezug zur in Längsrichtung verlaufenden Bezugsachse in Umfangsrichtung um die Trägerwelle erstreckt und von der Trägerwelle radial beabstandet ist; und
eine Lageranordnung (36),
wobei der drehbare Werkzeugträger über die Lageranordnung drehbar auf der Lagerträgerfläche montiert ist und wobei die Lageranordnung vorzugsweise eine Axialgleitlagerkombinationsanordnung ist.

3. Anordnung nach Anspruch 1 oder 2, wobei der drehbare Werkzeugträger einen sich radial erstreckenden Abschnitt zum Tragen eines Werkzeugs an dessen distalem Ende und einen sich axial erstreckenden Abschnitt, der sich vom sich radial erstreckenden Abschnitt axial weg zur Basis hin und umlaufend um die Trägerwelle erstreckt, umfasst.

4. Anordnung nach einem der vorstehenden Ansprüche, eine Bremsanordnung zum selektiven Fixieren der Drehstellung des drehbaren Werkzeugträgers in Bezug zur Basis umfassend.

5. Anordnung nach Anspruch 4, wenn direkt oder indirekt von Anspruch 2 abhängig, wobei die Bremsanordnung einen von der Trägerstruktur getragenen Bremssattel und eine vom drehbaren Werkzeugträger getragene Platte umfasst, und wobei der Bremssattel dazu angeordnet ist, selektiv gegen die Platte einzuspannen, um den drehbaren Werkzeugträger in Bezug zur Trägerstruktur in seiner Stellung zu halten.

6. Anordnung nach Anspruch 5, wobei sich die Platte nur teilweise um die in Längsrichtung verlaufende Bezugsachse erstreckt.

7. Anordnung nach Anspruch 5 oder Anspruch 6, wenn von Anspruch 3 abhängig, wobei die Platte von dem sich axial erstreckenden Abschnitt des drehbaren Werkzeugträgers getragen wird.

8. Anordnung nach einem der Ansprüche 5 bis 7, wenn direkt oder indirekt von Anspruch 2 abhängig, wobei sich die Platte in einer Ebene, die senkrecht zur in Längsrichtung verlaufenden Bezugsachse ist und durch die Platte verläuft, von der Trägerstruktur radial nach innen befindet.

9. Anordnung nach einem der Ansprüche 5 bis 8, wobei die Platte zwei Scheibensegmente (42, 44) umfasst, die von der Werkzeugschwenkanordnung über eine abnehmbare Zugangsabdeckung (94) der Trägerstruktur zugänglich und entfernbar sind, ohne, dass der drehbare Werkzeugträger von der Werkzeugschwenkanordnung demontiert werden muss.

10. Anordnung nach Anspruch 4, wenn direkt oder indirekt von Anspruch 2 abhängig, wobei die Bremsanordnung eine vom Werkzeugträger getragene Platte und eine von der Trägerstruktur getragene Platteneingriffsanordnung, um selektiv in die Platte einzugreifen, umfasst, wobei die Platte vorzugsweise eine ringförmige Platte umfasst und sich die Platte vorzugsweise in einer Ebene, die senkrecht zur in Längsrichtung verlaufenden Bezugsachse ist und durch die Platte verläuft, radial außerhalb der Trägerstruktur befindet.

11. Anordnung nach Anspruch 2 oder einem davon abhängigen Anspruch, einschließlich einer Antriebsanordnung zum Drehen des drehbaren Werkzeugträgers in Bezug zur Trägerwelle, wobei die Antriebsanordnung ein Elektromotor ist, der einen vom drehbaren Werkzeugträger getragenen Rotor und einen von der Trägerstruktur getragenen Stator aufweist.

12. Anordnung nach Anspruch 11, wenn direkt oder indirekt von Anspruch 3 abhängig, wobei der Rotor von dem sich axial erstreckenden Abschnitt des drehbaren Werkzeugträgers getragen wird.

13. Anordnung nach einem der vorstehenden Ansprüche, wenn direkt oder indirekt von Anspruch 2 und Anspruch 3 abhängig, wobei die Lageranordnung ein Gleitlager, das sich zwischen der Trägerstruktur und dem sich axial erstreckenden Abschnitt des drehbaren Werkzeugträgers befindet, und ein Axiallager, das sich zwischen der Trägerstruktur und dem sich radial erstreckenden Abschnitt des drehbaren Werkzeugträgers erstreckt, umfasst.

14. Anordnung nach einem der vorstehenden Ansprüche, wobei die Anordnung ein Schleifspindelstock zum Tragen einer Schleifscheibenspindel ist.

15. Werkzeugmaschine, die eine Anordnung nach einem der vorstehenden Ansprüche umfasst.

## Revendications

1. Ensemble de pivotement d'outil pour une machine-outil, l'ensemble comprenant :
une base (34) destinée à être montée sur une machine-outil ;
un arbre de support (6) dans une position et une orientation fixes par rapport à la base, l'arbre de support ayant un axe de référence longitudinal ;
un support d'outil rotatif (4) qui peut tourner par rapport à l'arbre de support autour de l'axe de référence longitudinal ; et **caractérisé par**
un support d'outil fixe (22) qui est fixe par rapport à l'arbre de support et porté par celui-ci, et sur lequel est monté un outil ou une jauge.

2. Ensemble selon la revendication 1, comprenant une structure de support (8) qui est fixe par rapport à la base, et définit une surface de support de palier qui s'étend circonférentiellement autour de l'arbre de support par rapport à l'axe de référence longitudinal et est espacée radialement de l'arbre de support ; et
un ensemble de palier (36), le support d'outil rotatif étant monté de manière rotative sur la surface de support de palier par l'intermédiaire de l'ensemble de palier, et de préférence l'ensemble de palier étant un ensemble combiné de palier de butée et de tourillon.

3. Ensemble selon la revendication 1 ou 2, le support d'outil rotatif comprenant une partie s'étendant radialement pour porter un outil au niveau de son extrémité distale, et une partie s'étendant axialement qui s'étend axialement à l'opposé de la partie s'étendant radialement vers la base et s'étend circonférentiellement autour de l'arbre de support.

4. Ensemble selon l'une quelconque des revendications précédentes, comprenant un ensemble de frein pour fixer sélectivement la position de rotation du support d'outil rotatif par rapport à la base.

5. Ensemble selon la revendication 4 lorsqu'elle dépend directement ou indirectement de la revendication 2, l'ensemble de frein comprenant un étrier de frein porté par la structure de support et une plaque portée par le support d'outil rotatif, et l'étrier de frein étant conçu pour serrer sélectivement contre la plaque pour maintenir le support d'outil rotatif en position par rapport à la structure de support.

6. Ensemble selon la revendication 5, la plaque s'étendant seulement partiellement autour de l'axe de référence longitudinal.

7. Ensemble selon la revendication 5 ou 6 lorsqu'elle dépend de la revendication 3, la plaque étant portée par la partie s'étendant axialement du support d'outil rotatif.

8. Ensemble selon l'une quelconque des revendications 5 à 7 lorsqu'elle dépend directement ou indirectement de la revendication 2, dans un plan qui est perpendiculaire à l'axe de référence longitudinal et passe par la plaque, la plaque étant située radialement vers l'intérieur de la structure de support.

9. Ensemble selon l'une quelconque des revendications 5 à 8, la plaque comprenant deux segments de disque (42, 44) qui sont accessibles et amovibles de l'ensemble de pivotement d'outil par l'intermédiaire d'un panneau d'accès amovible (94) de la structure de support, sans nécessiter le démontage du support d'outil rotatif de l'ensemble de pivotement d'outil.

10. Ensemble selon la revendication 4 lorsqu'elle dépend directement ou indirectement de la revendication 2, l'ensemble de frein comprenant une plaque portée par le support d'outil et un ensemble de mise en prise de plaque porté par la structure de support pour venir en prise sélectivement avec la plaque, de préférence la plaque comprenant une plaque annulaire, et de préférence dans un plan qui est perpendiculaire à l'axe de référence longitudinal et passe par la plaque, la plaque étant située radialement vers l'extérieur de la structure de support.

11. Ensemble selon la revendication 2 ou toute revendication qui en dépend, comprenant un dispositif d'entraînement pour faire tourner le support d'outil rotatif par rapport à l'arbre de support, le dispositif d'entraînement étant un moteur électrique ayant un rotor porté par le support d'outil rotatif et un stator porté par la structure de support.

12. Ensemble selon la revendication 11 lorsqu'elle dépend directement ou indirectement de la revendication 3, le rotor étant porté par la partie s'étendant axialement du support d'outil rotatif.

13. Ensemble selon l'une quelconque des revendications précédentes, lorsqu'elle dépend directement ou indirectement de la revendication 2 et de la revendication 3, l'ensemble de palier comprenant un palier de tourillon situé entre la structure de support et la partie s'étendant axialement du support d'outil rotatif et un palier de butée situé entre la structure de support et la partie s'étendant radialement du support d'outil rotatif.

14. Ensemble selon l'une quelconque des revendications précédentes, l'ensemble étant une tête de meule destinée à supporter une broche de meule.

15. Machine-outil comprenant un ensemble selon l'une quelconque des revendications précédentes.
